# EUROPÄISCHE PATENTSCHRIFT

(11) **EP 0 418 542 B1**
(45) Veröffentlichungstag und Bekanntmachung des Hinweises auf die Patenterteilung: **27.10.1993**
(21) Anmeldenummer: 90115352.8
(22) Anmeldetag: 10.08.1990
(51) Int. Cl.: F16G 1/28, B29D 29/08

(54) **Zahnriemen aus elastomerem Material für reversible Zahnriementriebe und Verfahren zu seiner Herstellung**
Elastomeric toothed belt for reversible transmission and method of manufacturing same
Courroie crantée en matériau élastomère pour transmission réversible et procédé de fabrication correspondant

(30) Priorität: 21.09.1989 DE 3931480
(43) Veröffentlichungstag der Anmeldung: 27.03.1991
(73) Patentinhaber: BRECO Kunststoffverarbeitungs-GmbH & Co. KG, D-32457 Porta Westfalica (DE)
(72) Erfinder: Breher, Rudolf, D-4952 Porta Westfalica (DE); Kölling, Rudi, D-4973 Vlotho (DE)
(74) Vertreter: Louis, Walter

(56) Entgegenhaltungen:
- EP-A- 0 050 011
- EP-A- 0 326 232
- DE-A- 2 014 538
- DE-A- 2 721 800
- DE-B- 1 197 710
- DE-U- 8 911 256

## Beschreibung

Die Erfindung betrifft einen Zahnriemen aus elastomerem Material für einen aus Zahnriemen und Zahnrad bestehenden Riementrieb, bei dem die Riemenzähne mit ihrer Kopffläche auf dem Grund der Zahnradnuten aufsitzen, sowie ein Verfahren zur Herstellung des Zahnriemens.

Bei dem z. B. aus der DE-AS 27 21 800 bekannten Konstruktionsprinzip von Zahnriementrieben ist die Höhe der Riemenzähne kleiner als die Tiefe der Zahnradnuten und sitzt der Zahnriemen mit dem Grund der Riemennuten auf dem Kopf der Scheibenzähne auf. Günstiger ist demgegenüber das z. B. aus der DE-AS 11 97 710 bekannte Konstruktionsprinzip, bei dem die Höhe der Riemenzähne größer ist als die Tiefe der Zahnradnuten und der Zahnriemen mit der Kopffläche seiner Zähne auf der Grundfläche der Zahnradnuten aufsitzt. Bei diesem Konstruktionsprinzip wird die gesamte radiale Flankenhöhe des Zahnrades für die kraftübertragende Zahnflankenberührung mit den Riemenzähnen ausgenutzt, was sich vor allem bei der häufig recht kleinen radialen Flankenhöhe auf die Flächenpressung an den Flanken der Riemenzähne günstig auswirkt, und wenn zur Vergrößerung des Anteils der Kraftübertragung durch Reibung zwischen den in radialer Richtung aufeinanderliegenden Berührungsflächen von Zahnriemen und Zahnrad innerhalb einer vorbestimmten Zahnteilung der Umfangsabstand der Zahnradzähne groß und dementsprechend die Umfangslänge der Zahnradzähne klein bemessen wird, spielt dies für die Festigkeit des üblicherweise aus Metall bestehenden Zahnrades keine Rolle, wird jedoch bei dem aus einem Kunststoff oder dergleichen bestehenden Zahnriemen die Zahnfußlänge der Riemenzähne und hiermit die Scherfestigkeit der Riemenverzahnung erhöht.

Bei einem Zahnriementrieb der eingangs genannten Art, bei dem die Riemenzahnhöhe größer ist als die Zahnradnutentiefe und die Kopfflächen der Riemenzähne auf dem Grund der Zahnradnuten aufsitzen, nimmt mit einer den Kraftübertragungsanteil durch Reibung erhöhenden Verlängerung der Kopffläche der Riemenzähne in Riemenumfangsrichtung auch das Geräusch zu, welches beim Einlaufen der Riemenzähne in die Zahnradnuten durch das Aufschlagen der Kopfflächen der Riemenzähne auf die Grundflächen der Zahnradnuten entsteht. Normalerweise und bei den gebräuchlichen Verzahnungsprofilen ist der Riemenzahn, ohne Eingriff mit dem Zahnrad, in Umlaufrichtung des Riementriebes etwas kürzer als die Zahnradnut, um einwandfrei in die Zahnradnut ein laufen zu können. Für reversible Zahnriementriebe ist es in vielen Fällen aber wichtig und unerläßlich, daß der Riemenzahn beim Eingriff mit dem Zahnrad die Zahnradnut an beiden Nutflanken spielfrei berührt. Bei dem für die Herstellung von Zahnriemen in Frage kommenden elastomeren Material, das die Anforderungen an Festigkeit und Formbeständigkeit des Zahnriemens und der Riemenzähne erfüllt, wie z. B. bei dem üblicherweise für Zahnriemen verwendeten Kunststoff Polyurethan, läßt sich mit den gebräuchlichen betrieblichen Riemenspannungen der Riemenzahn kaum in der Zahnhöhe so zusammendrücken, daß er durch ein der radialen Stauchung des Materialvolumens des Riemenzahnes ausweichendes Ausdehnen in der Riemenumfangsrichtung die Zahnradnut vollständig und spielfrei ausfüllen könnte. Voraussetzung dafür wäre ein nahezu schon spielfreies Eingreifen des Riemenzahnes in die Zahnradnut, und um dann außerdem ein einwandfreies Einlaufen der Riemenzähne in die Zahnradnuten zu erhalten, wären komplizierte Zahnformen bzw. Verzahnungsprofile erforderlich, die aber nicht nur die Herstellung des Zahnriemens , sondern auch die Herstellung der mit dem Zahnriemen betrieblich zusammenwirkenden Zahnräder erheblich verteuern.

Die Erfindung hat zur Aufgabe, einen Zahnriemen der eingangs genannten Art so auszubilden, daß die Geräuschentwicklung beim Auf laufen des Zahnriemens auf ein Zahnrad gedämpft und vermindert wird und daß die Riemenzähne zwar vor dem Eingriff mit dem Zahnrad in Umlaufrichtung etwas kürzer sind als die Zahnradnuten, um einwandfrei in die Zahnradnuten ein laufen zu können, beim Eingriff jedoch mit beiden Flanken der Zahnradnuten in der für einen reversiblen Zahnriementrieb notwendigen spielfreien Berührung stehen.

Diese Aufgabe löst die Erfindung durch eine Ausbildung des Zahnriemens mit den kennzeichnenden Merkmalen des Anspruchs 1. Mit der erfindungsgemäßen Maßnahme, bei einem z. B. aus Kunststoff bestehenden Zahnriemen in die Kopffläche der Riemenzähne Kopfstücke einzubetten, die aus einem gegenüber dem üblicherweise verwendeten Riemenkunststoff weichen elastischen Kunststoff bestehen, wird erreicht, daß durch eine gleich an dem Zahnriemen selber getroffene Maßnahme die Geräuschdämpfung eintritt und nicht jedes mit dem Zahnriemen in Benutzung kommende Zahnrad mit einer eine Geräuschdämpfung bewirkenden Maßnahme ausgebildet zu sein braucht, und daß gleichzeitig die Kopfstücke weich elastisch einer radialen Stauchung mit einer Ausdehnung in Riemenumfangsrichtung ausweichen und hierbei den gesamten Riemenzahn, durch eine Art Aufkeilen des Riemenzahnmaterials, in Riemenumfangsrichtung etwas auseinanderdrücken und dadurch das für den reversiblen Zahnriementrieb erforderliche spielfreie Ausfüllen der Zahnradnuten bewirken. Hierzu können die Kopfstücke im Längsschnitt des Zahnriemens gesehen beispielsweise durch gleichartige Wölbung der Außenseite und Innenseite eine elliptische Form aufweisen. Vorzugsweise besitzen die Kopfstücke im Längsschnitt des Zahnriemens gesehen eine Pilzform mit in das Riemenzahnmaterial hineinragendem Pilzstiel, um dadurch die Wirkung des Aufkeilens des Riemenzahnmaterials in der Riemenumfangsrichtung zu fördern. Ferner ist es vorteilhaft, den Grund der Zahnradnuten nicht als kreisbogenförmig gewölbtes, sondern als geradlinig ebene Fläche auszubilden, so daß die Kopfstücke nur bis zu einer Ebenflächigkeit ihrer Außenseite radial zusammengedrückt zu werden brauchen, um durch das zwangsläufige ausweichende Ausdehnen in Riemenumfangsrichtung den Riemenzahn zur spielfreien Berührung beider Zahnradnutenflanken auseinander zu drücken.

Eine erfindungsgemäße Verfahrensweise zur Herstellung des erfindungsgemäßen Zahnriemens, wenn dieser eine die gezahnte Riemenseite einschließlich der Kopfstücke bedeckende Gewebeauflage bekannter Art z. B. aus Nylongewebe besitzt, ist in den Unteransprüchen angegeben und wird nachstehend anhand der Zeichnungen noch näher beschrieben.

Die Zeichnungen zeigen als Ausführungsbeispiele
in Figur 1 einen Längsschnitt des erfindungsgemäßen Zahnriemens,
in Figur 2 den Zahnriemen der Figur 1 beim Eingriff in ein Zahnrad,
in Figur 3 eine Vorrichtung für die Durchführung des ersten Schrittes des erfindungsgemäßen Herstellungsverfahrens,
in Figur 4 eine Vorrichtung zur Durchführung des zweiten Schrittes des erfindungsgemäßen Herstellungsverfahrens.

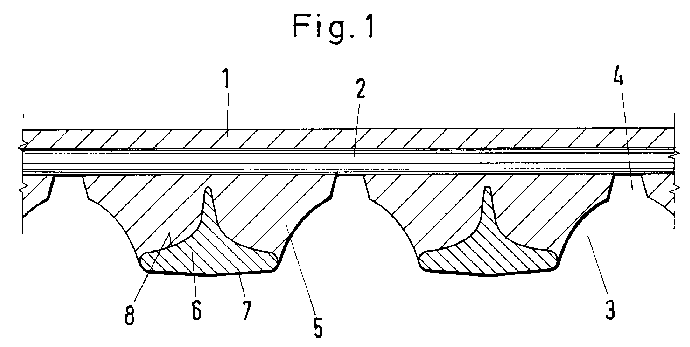

Der in der Figur 1 dargestellte Zahnriemen 1 besteht z. B. aus üblicherweise für Zahnriemen verwendetem Polyurethan mit einer Shore-Härte A im Bereich von etwa 85 bis 90 und enthält eine in das Riemenmaterial eingebettete zugfeste Armierungseinlage 2. Beim Einbetten der Armierungseinlage 2 in das Riemenmaterial werden Abstützungen angewendet, die die Armierungseinalge in der neutralen Biegezone des herzustellenden Zahnriemens abstützen und die dadurch beim fertigen Zahnriemen am Grund der Riemennuten 3 die bis zur Armierungseinlage 2 reichenden Vertiefungen 4 zurücklassen. In die Kopffläche jedes Riemenzahnes 5 ist ein Kopfstück 6 eingebettet, das aus einem Kunststoff besteht, der eine größere, weichere Elastizität als der Riemenkunststoff besitzt und mit dem Riemenkunststoff eine Schmelzverbindung eingeht. Beispielsweise kann das Kopfstück aus einem Polyurethan mit einer Shore-Härte A im Bereich von etwa 75 bis 80 bestehen. Die Außenseite 7 des Kopfstückes ist im Längsschnitt des Riemens gesehen aus der Kopffläche des Riemenzahnes nach außen vorgewölbt. Die mit dem Riemenkunststoff verbundene Innenseite 8 des Kopfstückes ist derart profiliert, daß das Kopfstück im Längsschnitt des Zahnriemens gesehen eine Pilzform hat, deren Stiel bis nahezu über die Höhe des Riemenzahnes 5 in den Riemenzahn hineinragt bzw. in den Riemenzahnkunststoff eindringt.

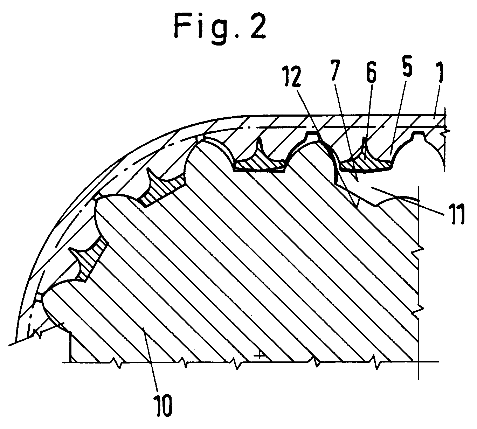

Die Figur 2 veranschaulicht das Zusammenwirken des erfindungsgemäßen Zahnriemens mit einem Zahnrad 10. Der Zahnriemen ist mit einer Riemenzahnhöhe ausgebildet, die größer ist als die Tiefe der Zahnradnuten 11, und ist dazu bestimmt, daß er mit der Kopffläche der Riemenzähne 5 auf dem Grund 12 der Zahnradnuten 11 aufsitzt. Ferner ist der Zahnriemen bei der Herstellung so dimensioniert, daß die Länge der Riemenzähne in der Riemenumfangsrichtung etwas kürzer ist als die lichte Weite der Zahnradnuten 11 in der Zahnradumfangsrichtung. Hierdurch wird erreicht, daß der Zahnriemen 1 beim Auflaufen auf das Zahnrad 10 einwandfrei mit seinen Riemenzähnen 5 in die Zahnradnuten 11 einlaufen kann. Ein nur lose in eine Zahnradnut 11 eingreifender Riemenzahn 5 würde in der Umlaufrichtung des Riementriebes ein Spiel in der Zahnradnut haben, das für einen reversiblen Zahnriementrieb nicht vorhanden sein dürfte. Jeder Zahnriemen wird in der Praxis mit einer gewissen Riemenspannung angewendet, die den Zahnriemen radial gegen den Umfang des Zahnrades andrückt. Beim erfindungsgemäßen Zahnriemen treffen die Riemenzähne 5, wenn der Zahnriemen 1 auf das Zahnrad 10 aufläuft, zunächst mit der höchsten Erhebung der vorgewölbten Außenseite 7 der Kopfstücke 6 auf den Grund 12 der Zahnradnuten 11 auf. Durch die betriebliche Riemenspannung werden dann die weich elastisch deformierbaren Kopfstücke 6 radial zusammengedrückt, bis sie sich mit ihrer Außenseite 7 ganzflächig auf den Grund 12 der Zahnradnuten 11 auf legen. Hierdurch wird erreicht, daß sich die Kopfflächen der Riemenzähne nicht mit einem lauten klatschenden Geräusch auf die Grundfläche der Zahnradnuten auf legen, sondern daß die Riemenzähne mit Hilfe der weich elastischen Kopfstücke stoß- und geräuschgedämpft in die Zahnradnuten einlaufen und auf deren Grundfläche aufsetzen. Das Zusammendrücken der weich elastisch verformbaren Kopfstücke 6 unter der Einwirkung der betrieblichen Riemenspannung hat weiterhin zur Wirkung, daß das Material des Kopfstückes bei radialer Stauchung, sobald die Außenseite 7 des Kopfstückes bis zur satten Anlage am Grund 12 der Zahnradnut plattgedrückt ist, in eine andere Richtung ausweichen muß und sich also in der Riemenumfangsrichtung ausdehnt. Dadurch wird mit Hilfe der gemäß der Erfindung in den Riemenzahn hineinragenden, insbesondere mit der beim dargestellten Ausführungsbeispiel im Querschnitt pilzförmig profilierten Innenseite 8 des Kopfstückes der Riemenzahn 5 selber durch eine Art Aufkeilen des Riemenzahnmaterials so elastisch verformt und in Riemenumfangsrichtung etwas auseinandergedrückt,daß der Riemenzahn mit beiden Zahnflanken zur spielfreien Anlage an den beiden Flanken der Zahnradnut kommt. Vorteilhafterweise haben die Zahnradnuten 11 einen geradlinigen anstatt bogenförmigen Nutengrund 12, damit die Kopfstücke 6 nicht unnötigerweise bis zu einer nach innen gewölbten Krümmung ihrer Außenseite 7 radial zusammengedrückt zu werden brauchen, um das Auseinanderdrücken des Riemenzahnmaterials in Riemenumfangrichtung zu erzeugen.

Wenn der erfindungsgemäße Zahnriemen auf seiner gezahnten Riemenseite einschließlich der Kopfstücke eine Gewebeauflage bekannter und gebräuchlicher Art besitzt, kann der Zahnriemen erfindungsgemäß folgendermaßen hergestellt werden.

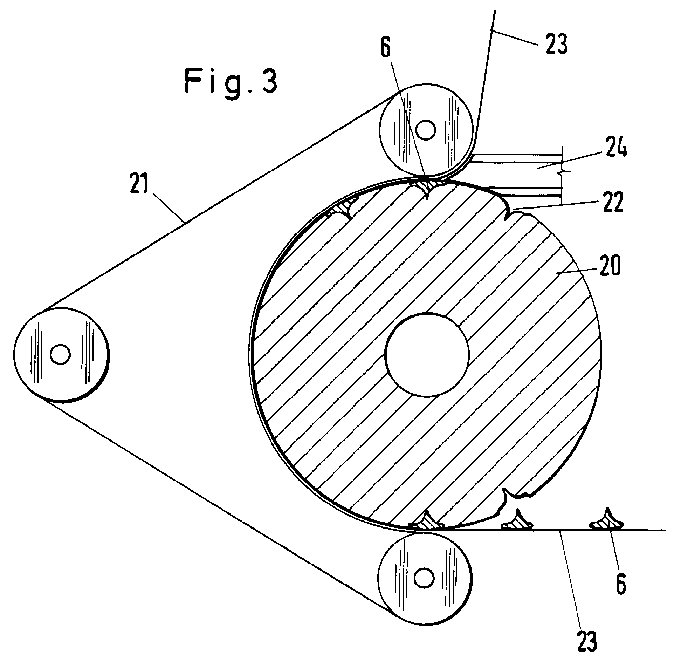

Für einen ersten Herstellungsschritt wird eine in Figur 3 dargestellte Vorrichtung aus einem drehbaren Formrad 20 und einem mit dem Formrad umlaufenden Formband 21 angewendet. Das Formrad 20 besitzt auf seinem Umfang Vertiefungen 22, deren Hohlraum der Form der aus dem weich elastischen Werkstoff herzustellenden Kopfstücke im Zahnkopf des Riemens entspricht, z. B. der Pilzform der Kopfstücke 6 beim Zahnriemen der Figur 1 Die Vertiefungen 22 sind in einem vorbestimmten Abstand voneinander auf dem Formradumfang angeordnet. Das Formband 21 liegt auf einem Teil des Formradumfanges auf und verschließt die Formradvertiefungen 22 zu Formhohlräumen. Zwischen das Formrad 20 und das Formband 21 wird der zum Bedecken der gezahnten Riemenseite bestimmte, in seiner Längsrichtung stretchartig elastisch dehnbare Gewebestreifen 23 eingeführt, wobei der Gewebestreifen 23 an das Formband 21 angelegt wird. Durch eine an der Zusammenführung von Formband 21 und Formrad 20 angeordnete Extruderdüse 24, an der radial innenseitig das Formrad 20 und radial außenseitig das auf dem Formband 21 aufliegende Gewebeband 23 abdichtend entlanggleiten, wird zwischen dem Gewebeband 23 und dem Formrad 20 das weich elastische elastomere Material in die mittels des Formbandes 21 verschlossenen und von dem Gewebeband 23 hohl überdeckten Formradvertiefungen 22 eingeführt. Dadurch werden an das Gewebeband 23 die einzelnen Kopfstücke 6 angespritzt, und zwar mit derjenigen Seite, die am fertigen Zahnriemen die von dem Gewebeband 23 bedeckte Außenseite 7 der Kopfstücke 6 ist. Durch die Krümmung des Formradumfanges und des aufgelegten Formbandes wird die zu den Figuren 1 und 2 beschriebene, nach außen vorgewölbte Form der Außenseite 7 der Kopfstücke 6 erzeugt.

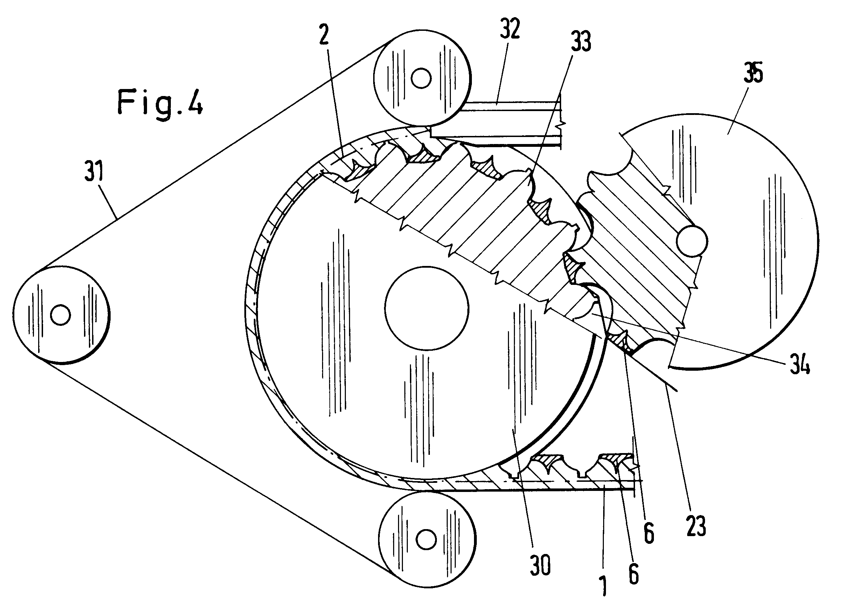

Für einen zweiten Herstellungsschritt wird eine in Figur 4 dargestellte Vorrichtung angewendet, die auch aus einem drehbaren Formrad 30 und einem mit dem Formrad 30 umlaufenden Formband 31 besteht. Das Formrad 30 besitzt auf seinem Umfang eine zahnradartig profilierte ringförmige Vertiefung, die dem Profil des herzustellenden Zahnriemens entspricht und die auf einem Teil des Formradumfanges von dem auf das Formrad aufgelegten Formband 31 zu einem bogenförmigen Formhohlraum verschlossen wird. Der Anfang dieses Formhohlraumes ist durch eine Extruderdüse 32 verschlossen, an deren radial außen liegender Seite das Formband 31 abdichtend entlanggleitet und durch die das für den Zahnriemen bestimmte elastomere Material sowie die zur Figur 1 beschriebene, in das Zahnriemenmaterial einzubettende zugfeste Armierungseinlage 2 in den Formhohlraum eingeführt werden. Mit der radial innen liegenden Seite der Extruderdüse 32 wirkt das Formrad 30 mit jeweils immer wenigstens einem Formradzahn 33 abdichtend zusammen, um ein Austreten von eingeführtem elastomerem Material aus dem Anfang des Formhohlraums zu verhindern. Das in dem ersten Herstellungsschritt mit den Kopfstücken 6 versehene Gewebeband 23 wird, mit den angespritzten Kopfstücken 6 auf der radial nach außen weisenden Seite des Gewebebandes 23 liegend, zwischen dem Formrad 30 und der Extruderdüse 32 in den Formhohlraum eingeführt. Beim Auflaufen des Gewebebandes 23 auf das Formrad 30 werden die vom Gewebeband getragenen Kopfstücke 6 von einem Hilfsrad 35 erfaßt, welches die Kopfstücke exakt in die Nuten 34 des Formrades 30 einführt und auf den Grund der Formradnuten 34 aufsetzt. Auf diese Weise können die Kopfstücke 6 zuverlässig zwischen Formrad 30 und Extruderdüse 32 in den Formhohlraum einlaufen. Zweckmäßigerweise kann das Formrad 30 zusätzlich auf dem Grund jeder Formradnut 34 mit einer nicht näher dargestellten kleinen Nadel ausgebildet sein, auf die das vom Hilfsrad 35 in die Formradnut 34 heruntergedrückte Kopfstück 36 aufgespießt wird und von der dadurch das Kopfstück zuverlässig beim Einlauf in den Formhohlraum festgehalten wird. Im Formhohlraum werden die Kopfstücke 6 und das Gewebeband durch den Druck des zwischen Formband 31 und Gewebeband 23 in den Formhohlraum eingeführten elastomeren Materials dann vollständig in die Nuten 34 der Formradvertiefung eingedrückt und werden die Kopfstücke 6 an ihrer radial nach außen gerichteten Seite von dem eingeführten Riemenmaterial angeschmolzen, so daß die Kopfstücke eine feste Schmelzverbindung mit dem Riemenmaterial eingehen.

## Patentansprüche

1. Zahnriemen aus elastomerem Material für einen aus Zahnriemen und Zahnrad bestehenden Riementrieb, bei dem die Riemenzähne mit ihrer Kopffläche auf dem Grund der Zahnradnuten aufsitzen, dadurch gekennzeichnet, daß in die Kopffläche jedes Riemenzahnes (5) ein Kopfstück (6) eingebettet ist, welches aus einem Werkstoff mit einer gegenüber dem Riemenmaterial größeren Elastizität besteht und sich in Riemenumfangsrichtung im wesentlichen über die Länge der Kopffläche des Riemenzahnes erstreckt, daß ferner das Kopfstück (6) im Längsschnitt des Riemens (1) gesehen derart aus der Kopffläche des Riemenzahnes (5) vorgewölbt ist, daß es beim Auflaufen des Zahnriemens (1) auf das Zahnrad (10) zunächst mit einer höchsten Erhebung seiner vorgewölbten Außenseite (7) auf den Grund (12) der Zahnradnuten (11) auftrifft und anschließend durch die betriebliche radiale Riemenspannung zu einer flächigen Anlage seiner Außenseite (7) am Grund (12) der Zahnradnuten (11) zusammengedrückt wird, und daß ferner die mit dem Riemenmaterial verbundene Innenseite (8) des Kopfstückes (6) im Längsschnitt des Riemens gesehen derart profiliert ist, daß das Kopfstück (6) eine von den beiden Flanken zu dem mittleren Bereich des Riemenzahnes (5) zunehmende und in das Riemenmaterial des Riemenzahnes hineinragende Querschnittshöhe aufweist, bei deren Zusammendrückung sich das Kopfstück (6) in Riemenlängsrichtung ausdehnt unter gleichzeitiger Auseinanderdrückung des Riemenzahnmaterials zu den beiden Riemenzahnflanken hin.

2. Zahnriemen nach Anspruch 1, dadurch gekennzeichnet,
daß die gezahnte Riemenseite einschließlich der Kopfstücke (6) mit einer Gewebeauflage (23) bedeckt ist.

3. Zahnriemen nach Anspruch 1, dadurch gekennzeichnet,
daß die Kopfstücke (6) im Längsschnitt des Zahnriemens gesehen eine pilzförmige Kontur (8) besitzen und mit dem Stiel der Pilzform in das Material der Riemenzähne (5) hineinragen, vorzugsweise über nahezu die Höhe des Riemenzahnes.

4. Verfahren zur Herstellung eines Zahnriemens nach Anspruch 2, dadurch gekennzeichnet,
daß in einem ersten Herstellungsschritt zwischen ein drehbares Formrad (20), welches auf seinem Umfang in vorbestimmten Abständen voneinander Vertiefungen (22) besitzt, deren Hohlraum der Form des aus weich elastischem Werkstoff herzustellenden Kopfstückes (6) im Zahnkopf des Riemens entspricht, und einer auf einen Teil des Formradumfanges aufgelegten und die Formradvertiefungen (22) zu Formhohlräumen verschließenden Abdeckung (21) ein Gewebeband (23) aus einem in Bandlängsrichtung elastisch dehnbaren Gewebe eingeführt wird und durch Einführen des weich elastischen Werkstoffs in die vom Gewebeband (23) überdeckten Formradvertiefungen (22) die Kopfstücke (6) mit ihrer zur Außenseite des herzustellenden Riemens (1) weisenden Oberfläche (7) an das Gewebeband (23) angespritzt werden,
daß in einem zweiten Herstellungsschritt zwischen einem drehbaren, auf seinem Umfang eine dem Profil des herzustellenden Zahnriemens entsprechend ringförmige Vertiefung aufweisenden Formrad (30) und einer die Formradvertiefung auf einem Teil des Formradumfanges verschließenden Abdeckung (31) ein Formhohlraum gebildet wird, daß ferner in den Formhohlraum das Gewebeband (23), mit den angespritzten Kopfstücken (6) auf der radial nach außen weisenden Seite des Gewebebandes liegend, eingeführt und so auf die Zähne (33) der Formradvertiefung aufgelegt wird, daß das in den Formhohlraum einlaufende Gewebeband jeweils mit dem ein Kopfstück (6) tragenden Gewebebandabschnitt eine Nut (34) der Formradvertiefung überdeckt, und daß ferner das elastomere Material für den Riemen am Formhohlraumanfang zwischen dem Gewebeband (23) und der Abdeckung (31) eingeführt wird und durch den Druck des eingeführten Riemenmaterials die die Kopfstücke (6) tragenden Gewebebandabschnitte unter elastischer Dehnung des Gewebes in die Nuten (34) der Formradvertiefung bis auf den Nutengrund eingedrückt werden, wobei die Kopfstücke (6) durch eine Schmelzverbindung fest mit dem Material des Riemens (1) verbunden werden.

## Claims

1. Elastomeric toothed belt for a drive comprising a toothed belt and gear, in which the tips of the belt teeth sit on the base of the gear grooves,
characterised in that a tip section (6) is embedded in the tip area of each belt tooth (5), said tip section (6) being composed of a material with a higher elasticity than that of the belt and extending essentially over the length of the tip area of the belt tooth in the peripheral direction of the belt; that the tip section (6) protrudes in the shape of an arch out of the tip area of the belt tooth (5), as viewed in longitudinal section of the belt (1), in such a way that, as the toothed belt (1) runs onto the gear (10), it strikes against the base (12) of the gear grooves (11) firstly with the highest raised section of its protruding, arched exterior (7) and is then compressed by the operating radial belt tension so that the surface of its exterior (7) fully abuts the base (12) of the gear grooves (11); and that the profile, as viewed in longitudinal section of the belt, of the interior (8) of the tip section (6) attached to the belt material is such that the cross-sectional height of the tip section (6) increases from the two flanks to the central area of the belt tooth (5) and projects into the belt material of the belt tooth (5), whereupon on compression, the tip section (6) extends in the longitudinal direction of the belt and at the same time the material of the belt tooth is pressed apart in the direction of the two flanks of the belt tooth.

2. Toothed belt according to Claim 1, characterised in that the toothed side of the belt, including the tip sections (6), is covered with a fabric layer (23).

3. Toothed belt according to Claim 1, characterised in that the tip sections (6) have a mushroom-shaped profile (8), as viewed in longitudinal section of the toothed belt, and the stem of said mushroom shape projects into the material of the belt teath (5), preferably to almost the full height of the belt tooth.

4. Method of manufacturing a toothed belt according to Claim 2, characterised in that in a first manufacturing step, a fabric strip (23) composed of a fabric that may be elastically stretched in the longitudinal direction of the strip is inserted between
- a rotatable shaped wheel (20) with recesses (22) spaced from one another at predetermined intervals on its periphery, the cavity of said recesses (22) corresponding to the shape of the tip section (6) to be manufactured from lightly elastic material in the tooth tip of the belt
- and a cover (21) disposed on one portion of the periphery of the shaped wheel and sealing the shaped wheel recesses (22) to form shaped cavities;
and by inserting the lightly elastic material into the shaped wheel recesses (22) covered by the fabric strip (23), the tip sections (6) are sprayed onto the fabric strip (23) with their surface (7) facing the outside of the belt (1) to be manufactured;
and that in a second manufacturing step, a shaped cavity is formed between
- a rotatable shaped wheel (30) having an annular recess on its periphery corresponding to the profile of the toothed belt to be manufactured
- and a cover (31) sealing the shaped wheel recess on a portion of the shaped wheel periphery;
that the fabric strip (23) is inserted into the shaped cavity with the sprayed-on tip sections (6) on the side of the fabric strip facing radially outwards, and is placed on the teeth (33) of the shaped wheel recess in such a way that the fabric strip running into the shaped cavity covers a groove (34) in the shaped wheel recess with each section of fabric strip carrying a tip section (6);
and that the elastomeric material for the belt is inserted at the leading edge of the shaped cavity between the fabric strip (23) and the cover (31), and as a result of the pressure of the inserted belt material, the sections of fabric strip carrying the tip sections (6) are pressed into the grooves (34) of the shaped wheel recess down into the groove base as the fabric stretches elastically, whereby the tip sections (6) are securely attached to the material of the belt (1) by a fused join.

## Revendications

1. Courroie dentée en matière élastomère pour une transmission à courroie se composant d'une courroie dentée et d'une roue dentée, dans laquelle les dents de la courroie reposent, avec leur sommet, au fond des gorges de la roue dentée, caractérisée en ce que dans le sommet de chaque dent (5) de la courroie est incorporé un embout (6) qui se compose d'une matière présentant une élasticité supérieure à celle de la matière de la courroie et s'étend, dans le sens périphérique de la courroie, essentiellement sur la longueur du sommet de la dent de la courroie, en ce qu'en outre l'embout (6), vu dans la coupe longitudinale de la courroie (1), est bombé en faisant saillie du sommet de la dent (5) de la courroie de sorte que lors de la montée de la courroie dentée (1) sur la roue dentée (10), l'embout atteigne le fond (12) des gorges (11) de la roue dentée, tout d'abord par une élévation la plus haute de sa face externe (7) bombée de manière saillante et, qu'ensuite, il est comprimé contre le fond (12) des gorges (11) de la roue dentée, par la tension radiale de fonctionnement de la courroie, en une surface plane de sa face externe (7), et en ce qu'en outre la face interne (8) de l'embout (6) reliée à la matière de la courroie est profilée, vu dans la coupe longitudinale de la courroie, de sorte que l'embout (6) présente une hauteur de section pénétrant dans la matière de la courroie de la dent de la courroie, hauteur qui augmente en partant des deux flancs en direction de la zone médiane de la dent (5) de la courroie, hauteur à la compression de laquelle l'embout (6) s'étend dans le sens de la longueur de la courroie sous un étalement simultané par pression de la matière de la dent de la courroie, en direction des deux flancs de la dent de la courroie.

2. Courroie dentée selon la revendication 1, caractérisée en ce que la face dentée de la courroie, y compris les embouts (6), sont recouverts d'une couche de tissu (23).

3. Courroie dentée selon la revendication 1, caractérisée en ce que les embouts (6), vus dans la coupe longitudinale de la courroie dentée, disposent d'un contour (8) en forme de champignon et qu'ils pénètrent avec la queue de la forme de champignon dans la matière des dents (5) de la courroie, de préférence sur presque la hauteur de la dent de la courroie.

4. Procédé pour la fabrication d'une courroie dentée selon la revendication 2, caractérisé en ce que dans une première étape de fabrication, est amenée une bande de tissu (23) en tissu extensible élastiquement dans le sens de la longueur de la bande, entre une roue de formage rotative (20) qui présente à sa périphérie des encastrements (22) à distance prédéterminée les uns des autres, dont la cavité correspond à la forme de l'embout (6) du sommet de la dent de la courroie, embout à fabriquer dans une matière souplement élastique, et un recouvrement (21) fermant les encastrements (22) de la roue de formage en formant des cavités de formage, recouvrement qui est placé sur une partie de la périphérie de la roue de formage et, en ce que, par l'introduction de la matière souplement élastique dans les encastrements (22) de la roue de formage recouverts par la bande de tissu (23), les embouts (6) sont injectés, par leur surface (7) orientée vers la face externe de la courroie (1) à fabriquer, à la bande de tissu (23), en ce que dans une seconde étape de fabrication, une cavité de formage est formée entre une roue de formage (30) qui présente, sur sa périphérie, un encastrement de forme annulaire correspondant au profile de la courroie dentée à fabriquer, et un recouvrement (31) fermant l'encastrement de la roue de formage sur une partie de la périphérie de la roue de formage, en ce qu'en outre la bande de tissu (23), avec les embouts (6) injectés se trouvant sur la face de la bande de tissu orientée radialement vers l'extérieur, est introduite dans la cavité de formage et est placée sur les dents (33) de l'encastrement de la roue de formage de sorte que la bande de tissu pénétrant dans la cavité de formage recouvre, à chaque fois avec la section de bande de tissu portant un embout (6), une gorge (34) de l'encastrement de la roue de formage, et en ce qu'en outre la matière élastique pour la courroie au début de la cavité de formage est introduite entre la bande de tissu (23) et le recouvrement (31) et par la pression de la matière de la courroie introduite, les sections de bande de tissu portant les embouts (6) sous l'extension élastique du tissu sont introduites par pression dans les gorges (34) de l'encastrement de la gorge de formage jusqu'au fond de la gorge, les embouts (6) étant alors reliés fixement, par fusion, à la matière de la courroie (1).
